(19) Europäisches Patentamt
European Patent Office
Office européen des brevets

(11) **EP 3 269 035 B1**

(12) **FASCICULE DE BREVET EUROPEEN**

(45) Date de publication et mention de la délivrance du brevet:
**10.06.2020 Bulletin 2020/24**

(51) Int Cl.:
*H02P 21/00* (2016.01)    *H02P 21/14* (2016.01)

(21) Numéro de dépôt: **16714970.7**

(86) Numéro de dépôt international:
**PCT/FR2016/050398**

(22) Date de dépôt: **19.02.2016**

(87) Numéro de publication internationale:
**WO 2016/142599 (15.09.2016 Gazette 2016/37)**

(54) **ESTIMATEUR DU COUPLE FOURNI PAR UNE MACHINE ÉLECTRIQUE DESTINÉE À LA PROPULSION D'UN VÉHICULE AUTOMOBILE ET PROCÉDÉ ASSOCIÉ**

SCHÄTZER DES DURCH EINE ELEKTRISCHE MASCHINE ZUM ANTRIEB EINES KRAFTFAHRZEUGES BEREITGESTELLTEN DREHMOMENTS UND ZUGEHÖRIGES VERFAHREN

ELECTRICAL MACHINE TORQUE ESTIMATOR USED FOR THE VEHICLE ELECTRIC DRIVE AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2015 FR 1552013**

(43) Date de publication de la demande:
**17.01.2018 Bulletin 2018/03**

(73) Titulaire: **Renault S.A.S.**
**92100 Boulogne-Billancourt (FR)**

(72) Inventeur: **BEN-AICHA, Fehd**
**78280 Guyancourt (FR)**

(56) Documents cités:
**CN-A- 103 414 423     CN-A- 103 872 951**
**KR-A- 20130 088 573**

**Description**

La présente demande concerne le domaine des véhicules automobiles à propulsion électrique ou hybride, et plus particulièrement des modules de commande de la machine électrique de propulsion équipant de tels véhicules.

Dans un véhicule automobile à propulsion électrique ou hybride, il importe particulièrement, par exemple pour des raisons de confort et de sécurité, de contrôler le plus précisément possible le couple délivré par la machine électrique de propulsion du véhicule.

Afin de réguler le couple délivré, on peut utiliser une boucle de régulation classique comprenant un sommateur, un correcteur et un moyen d'estimation ou de mesure du couple délivré par la machine électrique.

Concernant le moyen d'estimation ou de mesure, le couple délivré par une machine électrique peut être déterminé à partir de l'intensité d'alimentation de la machine électrique et du flux magnétique généré par les bobinages.

Le flux magnétique généré par les bobinages d'une machine électrique peut en effet être déduit de l'intensité d'alimentation. La relation entre l'intensité et le flux comprend un premier domaine linéaire, pour de faibles valeurs d'intensité d'alimentation, et un domaine non linéaire, se traduisant par une saturation du flux magnétique, pour les hautes intensités d'alimentation comme par exemple dans le document CN103414423.

Il est alors difficile d'estimer avec précision le flux magnétique généré par une machine électrique. Cet inconvénient est d'autant plus important que le couplage magnétique de la machine électrique est fort, comme par exemple sur une machine synchrone à rotor bobiné.

Afin d'éviter de fonctionner dans le domaine non linéaire, on peut surdimensionner la machine électrique. Cela n'est toutefois pas possible dans le domaine automobile, les machines électriques étant dimensionnées de manière à répondre à d'importantes contraintes de poids et d'encombrement. Il est alors nécessaire de savoir estimer avec précision le flux magnétique dans le domaine linéaire comme dans le domaine non linéaire.

Le logiciel Maxwell® permet de calculer les composantes dans le repère de Park du flux magnétique généré par la machine électrique, en fonction des intensités d'alimentation exprimées dans le repère de Park, dans le domaine linéaire comme dans le domaine non linéaire de fonctionnement de la machine électrique.

Cependant, ce logiciel nécessite d'importantes ressources de calcul et de mémoire. Il est donc difficilement envisageable de l'incorporer sur l'ordinateur de bord d'un véhicule automobile.

Au vu de ce qui précède, le but de l'invention est de fournir un procédé et un dispositif d'estimation du couple délivré par une machine électrique de propulsion d'un véhicule automobile, permettant une estimation du flux magnétique précise dans le domaine de fonctionnement non linéaire de la machine électrique, et nécessitant de faibles ressources de calcul et de mémoire.

A cet effet, il est proposé un procédé d'estimation du couple d'une machine électrique d'un véhicule automobile à propulsion électrique ou hybride, dans lequel :

- on recueille les intensités d'alimentation des phases du stator de la machine et l'intensité d'alimentation du rotor de la machine,
- on détermine un vecteur d'intensité comprenant comme coordonnées une intensité directe, une intensité quadratique, lesdites intensité directe et quadratique correspondant auxdites intensités d'alimentation des phases exprimées dans un repère biphasé, et l'intensité d'alimentation du rotor,
- on estime les composantes dans le repère biphasé du flux magnétique induit par la machine électrique,
- on calcule une estimation du couple fourni par la machine électrique,
- on calcule au moins une intensité pondérée en faisant la somme des coordonnées du vecteur d'intensité , chaque coordonnée étant pondérée par un poids, un biais étant en outre ajouté à ladite somme, les poids et les biais étant déterminés par une méthode de rétropropagation du gradient,
- et pour estimer les composantes du flux magnétique, on applique au moins une fonction sigmoïde (logsig, tansig) à ladite au moins une intensité pondérée.

Le repère biphasé peut par exemple être un repère de Park ou un repère de Clarke. Dans de tels repères, les intensités d'alimentation des phases du stator sont transformées en un vecteur d'intensité à deux coordonnées : une intensité directe et une intensité quadratique. Dans le cas d'une machine électrique à rotor bobiné, l'intensité d'alimentation du rotor peut être ajoutée en tant que troisième coordonnée du vecteur d'intensité.

De par leur forme, les fonctions sigmoïdes sont idéales pour approximer les représentations en forme de nappe en trois dimensions des flux magnétiques. Par ailleurs, l'application d'une fonction sigmoïde ne nécessite que peu de ressources de calcul et de mémoire.

Dans un tel mode de réalisation, on peut calculer, pour chaque intensité pondérée, une image en appliquant une fonction sigmoïde à ladite intensité pondérée.

On peut en outre prévoir de calculer les composantes du flux en faisant la somme des images délivrées par les fonctions sigmoïdes, chaque image étant pondérée par un poids, un biais étant en outre ajouté à ladite somme.

En pondérant les résultats intermédiaires tels que les intensités exprimées dans un repère biphasé tel qu'un repère de Park ou de Clarke et les images délivrées par les fonctions sigmoïdes par des poids, et en leur additionnant des biais, il est possible d'ajuster les paramètres de calcul des composantes du flux de manière à améliorer la précision.

Dans de tels modes de réalisation, les poids et les biais sont déterminés par une méthode de rétropropagation du gradient.

La méthode de rétropropagation du gradient est une méthode classique visant à faire converger les poids et les biais vers des valeurs limites permettant d'améliorer le procédé d'estimation. Comme cela sera expliqué par la suite, elle est particulièrement adaptée dans le cadre de cette invention.

Dans un mode de mise en œuvre, pour le calcul de la composante directe du flux magnétique dans un repère de Park, on calcule quatre intensités pondérées et on applique une fonction logsig : $x \mapsto \dfrac{1}{1 + e^{-x}}$ à chacune des quatre intensités pondérées.

Le choix de la fonction logsig est particulièrement avantageux pour déterminer la composante directe du flux magnétique, car celle-ci est à valeurs positives.

Selon un autre mode de mise en œuvre, pour le calcul de la composante quadratique du flux magnétique dans un repère de Park, on calcule quatre intensités pondérées et on applique une fonction tansig : $x \mapsto \tanh(x)$ à chacune des quatre intensités pondérées.

Le choix de la fonction tansig pour la composante quadratique du flux est particulièrement judicieux, étant donné que la composante quadratique est à valeurs positives et négatives.

Selon un autre aspect, il est proposé un estimateur de couple pour module de commande d'une machine électrique d'un véhicule automobile à propulsion électrique ou hybride, comprenant des moyens pour recueillir les intensités d'alimentation des phases du stator de la machine et l'intensité d'alimentation du rotor de la machine, des moyens pour déterminer un vecteur d'intensité comprenant comme coordonnées une intensité directe, une intensité quadratique, lesdites intensité directe et quadratique correspondant auxdites intensités d'alimentation des phases exprimées dans un repère biphasé, et l'intensité d'alimentation du rotor, un calculateur apte à calculer les composantes dans ledit repère biphasé du flux magnétique induit par la machine électrique et apte à estimer le couple fourni par la machine électrique, caractérisé en ce que le calculateur comprend au moins un module de calcul d'une intensité pondérée en faisant la somme des coordonnées du vecteur d'intensité, chaque coordonnée étant pondérée par un poids, un biais étant en outre ajouté à ladite somme, les poids et les biais étant déterminés par une méthode de rétropropagation du gradient, chaque module de calcul étant associé à un module d'application d'une fonction sigmoïde apte à appliquer une fonction sigmoïde (logsig, tansig) à l'intensité pondérée calculée par le module de calcul associé. Selon un mode de réalisation la machine électrique est une machine synchrone à rotor bobiné.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 représente schématiquement un module de commande d'une machine électrique d'un véhicule automobile à propulsion hybride électrique,
- la figure 2 représente schématiquement l'estimateur de couple du module de commande de la figure 1, et
- la figure 3 représente schématiquement un procédé d'estimation du couple pouvant être mis en œuvre au moyen de l'estimateur des figures 1 et 2.

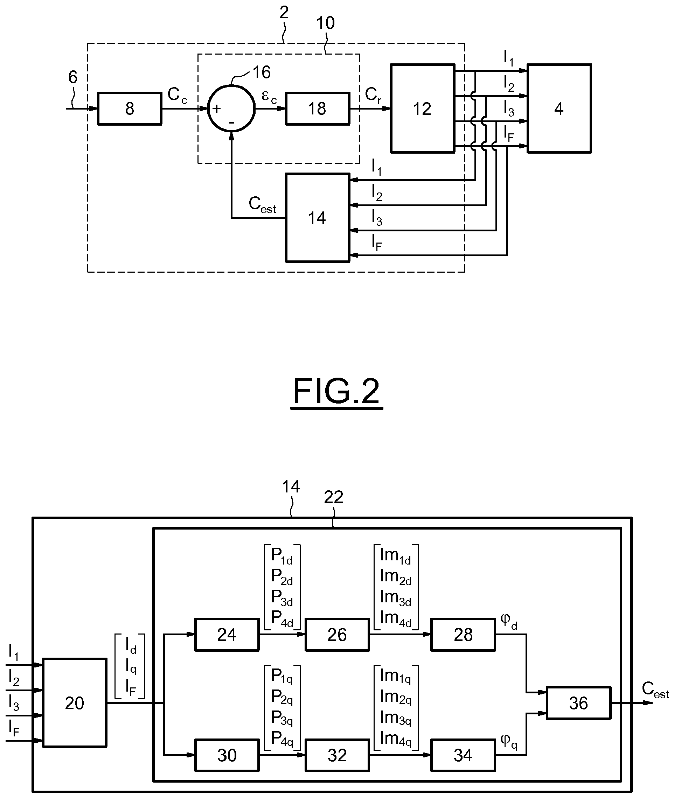

En référence à la figure 1, il est représenté un module de commande 2 d'une machine électrique 4. La machine électrique 4 est destinée à la propulsion d'un véhicule automobile hybride électrique.

On peut envisager, sans sortir du cadre de l'invention, d'utiliser un tel module de commande pour une machine électrique destinée à la propulsion d'un véhicule automobile à propulsion électrique « pure ». Les caractéristiques et le fonctionnement du module de commande peuvent alors être exactement les mêmes que ce qui sera décrit par la suite.

Le module de commande 2 recueille des données issues du conducteur, en l'espèce l'enfoncement de la pédale d'accélérateur. Cette donnée est symboliquement représentée par la flèche référencée 6 sur la figure 1.

Un bloc de calcul 8 traite les données recueillies symbolisées par la flèche 6, de manière à calculer un couple de consigne $C_c$. le couple de consigne correspond au couple souhaité par le conducteur du véhicule.

Le couple de consigne $C_c$ est traité par un bloc de régulation 10, délivrant un couple régulé $C_r$.

Le couple $C_r$ est traité par un actionneur électrotechnique 12 délivrant les intensités d'alimentation de la machine électrique 4. Dans ce mode de réalisation, la machine électrique 4 est une machine électrique synchrone à stator à trois phases et à rotor bobiné. L'actionneur 12 délivre donc une intensité $I_1$ d'alimentation de la première phase du stator de la machine électrique 4, une intensité $I_2$ d'alimentation de la deuxième phase du stator, une intensité $I_3$ d'alimentation de la troisième phase du stator, et une intensité $I_F$ d'alimentation du bobinage du rotor de la machine électrique 4.

Le module de commande 2 comprend en outre un estimateur de couple 14. L'estimateur de couple 14 recueille les intensités d'alimentation $I_1$, $I_2$, $I_3$ et $I_F$ délivrées par l'actionneur 12 et appliquées aux composants de la machine électrique 4. L'estimateur 14 traite ces signaux et délivre en sortie une estimation $C_{est}$ du couple délivré par la machine électrique 4.

Le bloc de régulation 10 comprend un sommateur 16 apte à calculer la différence entre le couple de consigne $C_c$, délivré par le bloc de calcul 8 et l'estimation de couple $C_{est}$, délivrée par l'estimateur 14. Le sommateur calcul un écart de couple $\varepsilon_c = C_c - C_{est}$.

Le bloc de régulation 10 comprend en outre un correcteur 18, traitant l'erreur $\varepsilon_c$ pour calculer le couple régulé $C_r$.

On a représenté sur la figure 2 l'estimateur 14 du module de commande de la figure 1.

Dans l'exemple illustré, l'estimateur 14 comprend des moyens 20 pour calculer les intensités d'alimentation exprimées dans un repère de Park. Le repère de Park est ici utilisé à titre d'exemple d'un repère biphasé. On pourrait également utiliser un repère de Clarke. Le repère de Park est lié au champ tournant de la machine électrique 4 et permet d'exprimer les intensités d'alimentation des trois phases du stator de la machine électrique 4 en un vecteur comprenant deux coordonnées : une intensité directe $I_d$ et une intensité quadratique $I_q$. On ajoute à ce vecteur une troisième coordonnée égale au courant $I_F$ d'alimentation du rotor. De cette manière, en appliquant la transformée de Park, les moyens 20 délivrent un vecteur dit vecteur d'intensité, de dimension 3 : $\begin{bmatrix} I_d \\ I_q \\ I_F \end{bmatrix}$.

L'estimateur 14 comprend un calculateur 22 apte à calculer l'estimation $C_{est}$ du couple délivré par la machine électrique 4 en fonction du vecteur d'intensité délivré par les moyens 20.

Le calculateur 22 comprend un premier module de calcul 24 apte à calculer le vecteur d'intensités pondérées. Les intensités pondérées qui composent ce vecteur désignent des grandeurs calculées en faisant une somme pondérée des intensités exprimées dans le repère de Park, chaque intensité étant multipliée par un poids prédéterminé, un biais prédéterminé pouvant en outre être ajouté à la dite somme. Dans ce mode de réalisation, le vecteur d'intensité pondérée est un vecteur à quatre composantes : $(P_{id})_{1 \leq i \leq 4}$.

Dans ce mode de réalisation, les intensités pondérées sont calculées comme suit :

$$\begin{bmatrix} P_{1d} \\ P_{2d} \\ P_{3d} \\ P_{4d} \end{bmatrix} = \begin{bmatrix} W_{11}^d & W_{21}^d & W_{31}^d \\ W_{12}^d & W_{22}^d & W_{32}^d \\ W_{13}^d & W_{23}^d & W_{33}^d \\ W_{14}^d & W_{24}^d & W_{34}^d \end{bmatrix} \times \begin{bmatrix} I_d \\ I_q \\ I_F \end{bmatrix} + \begin{bmatrix} b_1^d \\ b_2^d \\ b_3^d \\ b_4^d \end{bmatrix}.$$

Dans cette relation, les « $W_{ij}$ » représentent un poids, les « $b_i$ » représentant un biais. Ainsi, chaque composante du vecteur d'intensités pondérées est égale à une somme pondérée des composantes du vecteur d'intensités, un biais pouvant éventuellement être ajouté à ladite somme.

Le calculateur 22 comprend un module d'application 26 d'une fonction sigmoïde. Dans ce mode de réalisation, la fonction sigmoïde appliquée est la fonction logsig : $x \mapsto \dfrac{1}{1 + e^{-x}}$. Le module d'application 26 traite le vecteur $(P_{id})_{1 \leq i \leq 4}$ d'intensités pondérées en appliquant la fonction logsig à chacune de ces composantes. De la sorte, le module d'application 26 délivre le vecteur image $(Im_{id})_{1 \leq i \leq 4}$.

Le calculateur 22 comprend un deuxième module de calcul 28 apte à calculer la composante directe $\varphi_d$ du flux magnétique par la machine électrique 4. Le second module de calculs 28 effectue le calcul illustré par la relation suivante :

$$\varphi_d = \begin{bmatrix} W_1^d & W_2^d & W_3^d & W_4^d \end{bmatrix} \times \begin{bmatrix} Im_{1d} \\ Im_{2d} \\ Im_{3d} \\ Im_{4d} \end{bmatrix} + b_0^d$$

Ainsi, comme pour le calcul des intensités pondérées, la composante directe du flux est égale à une somme pondérée des images calculées par les fonctions sigmoïdes, à laquelle peut éventuellement être ajouté un biais.

Au moyen des modules de calculs 24 et 28 et du module d'application 26, on a calculé la composante directe du flux magnétique créé par la machine électrique 4, en appliquant quatre fonctions sigmoïdes à des intensités pondérées calculées à partir des coordonnées de l'intensité d'alimentation de la machine électrique dans le repère de Park. Dans ce mode de réalisation, la même fonction sigmoïde est appliquée aux quatre composantes du vecteur d'intensités pondérées. On peut toutefois envisager, sans sortir de l'invention, un module d'application d'une fonction sigmoïde appliquant différentes fonctions sigmoïdes aux composantes du vecteur d'intensités pondérées. On peut également envisager, sans sortir du cadre de l'invention, de faire varier le nombre de composantes du vecteur d'intensités pondérées et du vecteur image, lesdits vecteurs ayant nécessairement la même dimension. Le nombre de composantes peut être n'importe quel entier naturel non nul.

Plus le vecteur d'intensités pondérées et le vecteur image ont de composantes, plus l'estimation de $\varphi_d$ est fiable. En revanche, en faisant augmenter leur dimension, on augmente les ressources en calcul et en mémoire que nécessite le calculateur 22 pour fonctionner.

Dans ce mode de réalisation, le vecteur d'intensités pondérées et le vecteur image ont quatre composantes, en conséquence de quoi le module d'application 26 applique quatre fonctions sigmoïdes. Un tel mode de réalisation est un compromis avantageux permettant une bonne fiabilité de l'estimation tout en nécessitant de faibles ressources de calcul et de mémoire.

Dans ce mode de réalisation, on utilise une première matrice poids à quatre lignes et trois colonnes, constituée de douze poids $\left(W_{ij}^{d}\right)_{1 \leq i \leq 4; 1 \leq j \leq 4}$, et une deuxième matrice poids à une ligne et quatre colonnes, constituée de quatre poids $\left(W_{i}^{d}\right)_{1 \leq i \leq 4}$. On utilise par ailleurs un vecteur biais à quatre composantes $\left(b_{i}^{d}\right)_{1 \leq i \leq 4}$, et un scalaire biais $b_{0}^{d}$. Les valeurs des poids et des biais sont prédéterminées, par l'algorithme de rétropropagation du gradient. L'algorithme de rétropropagation du gradient permet de faire converger par itération la méthode d'estimation mise en œuvre par le calculateur 22 avec une méthode de calcul de la valeur réelle du couple généré par la machine électrique 4, par exemple un calcul analytique au moyen du logiciel Maxwell®.

Le calculateur 22 comprend un troisième module de calcul 30, un deuxième module d'application 32 d'une fonction sigmoïde et d'un quatrième module de calcul 34.

Le troisième module de calcul 30 est conçu pour traiter le vecteur intensité d'alimentation ($I_d$, $I_q$, $I_F$). Le troisième module de calcul 30 calcule un vecteur d'intensités pondérées déterminé selon la relation suivante :

$$\begin{bmatrix} P_{1q} \\ P_{2q} \\ P_{3q} \\ P_{4q} \end{bmatrix} = \begin{bmatrix} W_{11}^{q} & W_{21}^{q} & W_{31}^{q} \\ W_{12}^{q} & W_{22}^{q} & W_{32}^{q} \\ W_{13}^{q} & W_{23}^{q} & W_{33}^{q} \\ W_{14}^{q} & W_{24}^{q} & W_{34}^{q} \end{bmatrix} \times \begin{bmatrix} I_d \\ I_q \\ I_F \end{bmatrix} + \begin{bmatrix} b_{1}^{q} \\ b_{2}^{q} \\ b_{3}^{q} \\ b_{4}^{q} \end{bmatrix}.$$

Le vecteur d'intensités pondérées $(P_{iq})_{1 \leq i \leq 4}$ est ensuite traité par le second module d'application 32. Le second module d'application 32 applique à chacune des composantes du vecteur $(P_{iq})_{1 \leq i \leq 4}$ la fonction sigmoïde tansig : $x \mapsto \tanh(x)$. De cette manière, le second module d'application 32 détermine un vecteur image :

$$\begin{bmatrix} \mathrm{Im}_{1q} \\ \mathrm{Im}_{2q} \\ \mathrm{Im}_{3q} \\ \mathrm{Im}_{4q} \end{bmatrix} = \begin{bmatrix} \tan sig\left(P_{1q}\right) \\ \tan sig\left(P_{2q}\right) \\ \tan sig\left(P_{3q}\right) \\ \tan sig\left(P_{4q}\right) \end{bmatrix}$$

Le vecteur image est ensuite traité par le quatrième module de calcul 34, calculant la composante quadratique $\varphi_q$ du flux magnétique créé par la machine électrique, selon la relation suivante :

$$\varphi_q = \begin{bmatrix} W_1^q & W_2^q & W_3^q & W_4^q \end{bmatrix} \times \begin{bmatrix} \mathrm{Im}_{1q} \\ \mathrm{Im}_{2q} \\ \mathrm{Im}_{3q} \\ \mathrm{Im}_{4q} \end{bmatrix} + b_0^q$$

Ainsi, les modules de calculs et d'application 30, 32 et 34 rendent possible le calcul de la composante quadratique du flux magnétique, en mettant en œuvre des calculs analogues à ceux mis en œuvre pour le calcul de la composante directe. Les poids $\left(W_{ij}^q\right)_{1\leq i\leq 4; 1\leq j\leq 4}$, $\left(W_i^q\right)_{1\leq i\leq 4}$ et les biais $\left(b_i^q\right)_{1\leq i\leq 4}$ et $b_0^q$ sont déterminés par l'algorithme de rétropropagation du gradient, soit de la même manière que les poids et les biais utilisés pour le calcul de la composante directe.

Le calculateur 22 comprend un cinquième module de calcul 36 apte à calculer l'estimation $C_{est}$ du couple fourni par la machine électrique 4, selon la relation :

$$C_{est} = \frac{3}{2} \cdot p \cdot \left( I_d \cdot \varphi_q - I_q \cdot \varphi_d \right),$$

où p représente le nombre de paires de pôles de la machine électrique 4.

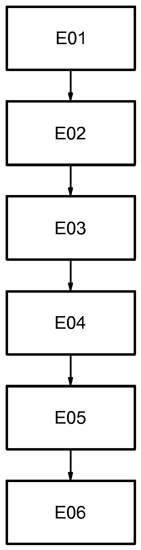

On a représenté en figure 3 un procédé d'estimation du couple pouvant être mis en œuvre au moyen de l'estimateur représenté en figures 1 et 2.

Le procédé comprend une première étape E01 de récupération des intensités d'alimentation des phases du stator et du rotor de la machine électrique 4. Pour ce faire, on peut mesurer les intensités d'alimentation $I_1$, $I_2$ et $I_3$ des trois phases du stator et l'intensité d'alimentation $I_F$ du bobinage du rotor de la machine électrique 4.

Le procédé comprend une seconde étape E02 d'expression des intensités dans le repère de Park. Au cours de l'étape E02, on calcule les composantes de l'intensité d'alimentation de la machine électrique 4 dans le repère de Park. Pour se faire, on peut appliquer, la transformée de Park au vecteur $\begin{bmatrix} I_1 \\ I_2 \\ I_3 \end{bmatrix}$. En appliquant la transformée de Park, on obtient un vecteur à deux composantes $\begin{bmatrix} I_d \\ I_q \end{bmatrix}$. En ajoutant une composante $I_F$, on obtient un vecteur $\begin{bmatrix} I_d \\ I_q \\ I_F \end{bmatrix}$ noté vecteur intensité.

Le procédé comprend une troisième étape E03 de calculs des intensités pondérées. Au cours de cette étape, on calcule les vecteurs $\begin{bmatrix} P_{1d} \\ P_{2d} \\ P_{3d} \\ P_{4d} \end{bmatrix}$ et $\begin{bmatrix} P_{1q} \\ P_{2q} \\ P_{3q} \\ P_{4q} \end{bmatrix}$, en fonction du vecteur intensité $\begin{bmatrix} I_d \\ I_q \\ I_F \end{bmatrix}$. Pour ce faire, on peut multiplier le vecteur intensité par une matrice poids et lui ajouter un vecteur biais, comme cela a été présenté en référence à la figure 2. Pour mettre en œuvre ce calcul, on peut utiliser les blocs de calculs 24 et 30 du calculateur 22.

Le procédé comprend une quatrième étape E04 d'application d'une fonction sigmoïde. Au cours de cette étape, on applique une fonction sigmoïde à chacune des composantes des vecteurs d'intensités pondérées $\begin{bmatrix} P_{1d} \\ P_{2d} \\ P_{3d} \\ P_{4d} \end{bmatrix}$ et $\begin{bmatrix} P_{1q} \\ P_{2q} \\ P_{3q} \\ P_{4q} \end{bmatrix}$.

A l'issue de l'étape E04, on a calculé les vecteurs image $\begin{bmatrix} \text{Im}_{1d} \\ \text{Im}_{2d} \\ \text{Im}_{3d} \\ \text{Im}_{4d} \end{bmatrix}$ et $\begin{bmatrix} \text{Im}_{1q} \\ \text{Im}_{2q} \\ \text{Im}_{3q} \\ \text{Im}_{4q} \end{bmatrix}$.

Le procédé comprend une cinquième étape E05 de calcul des composantes dans le repère de Park des flux magnétiques. Au cours de cette étape, on calcule les composantes directe $\varphi_d$ et quadratique $\varphi_q$ du flux magnétique généré par la machine électrique 4. Pour mettre en œuvre ce calcul, on peut utiliser les blocs de calculs 28 et 34 du calculateur 22.

Le procédé comprend une sixième et dernière étape E06 de calcul de l'estimation $C_{est}$ du couple fourni par la machine électrique 4. Au cours de cette étape, on utilise les valeurs des composantes directes et quadratiques de l'intensité d'alimentation et du flux fourni par la machine électrique 4, en appliquant la relation suivante :

$$C_{est} = \frac{3}{2} \cdot p \cdot \left( I_d \cdot \varphi_q - I_q \cdot \varphi_d \right).$$

A l'issue de cette étape, on a calculé une estimation $C_{est}$ du couple fourni par la machine électrique.

Ainsi, grâce à l'estimateur et au procédé d'estimation décrits en référence aux figures 1 et 3, il est possible d'obtenir une estimation fiable du couple délivré par la machine électrique, dans le domaine linéaire de fonctionnement comme dans le domaine non linéaire.

En utilisant seulement des opérations linéaires et des fonctions sigmoïdes, on limite la quantité de ressources de calcul et de mémoire nécessaires pour mettre en œuvre l'estimation. L'invention est donc particulièrement adaptée pour des systèmes embarqués tels que les ordinateurs de bord de véhicules automobiles.

En utilisant la méthode de rétropropagation du gradient pour déterminer les poids et les biais, on fait converger les valeurs de ces paramètres vers des valeurs limites, de manière à faire converger les résultats de l'estimation avec les résultats d'une estimation mise en œuvre avec des moyens de calcul lourds, tels qu'un logiciel de calcul analytique.

Il est alors possible de mettre en œuvre une estimation fiable du couple délivré par une machine électrique de propulsion d'un véhicule automobile, sans nécessiter davantage de ressources de calcul et de mémoire que celles de l'ordinateur de bord. Il en résulte une meilleure précision de la commande du véhicule, ce qui a pour effet une meilleure sécurité, un meilleur confort et une consommation d'énergie amoindrie.

## Revendications

1. Procédé d'estimation du couple d'une machine électrique (4) d'un véhicule automobile à propulsion électrique ou hybride, dans lequel :

   - on recueille les intensités ($I_1$, $I_2$, $I_3$) d'alimentation des phases du stator de la machine et l'intensité ($I_F$) d'alimentation du rotor de la machine,
   - on détermine un vecteur d'intensité comprenant comme coordonnées une intensité directe ($I_d$), une intensité quadratique ($I_q$), lesdites intensité directe et quadratique correspondant auxdites intensités d'alimentation des phases exprimées dans un repère biphasé, et l'intensité ($I_F$) d'alimentation du rotor,
   - on estime les composantes ($\varphi_d$, $\varphi_q$) dans le repère biphasé du flux magnétique ($\varphi$) induit par la machine électrique (4),
   - et on calcule une estimation ($C_{est}$) du couple fourni par la machine électrique (4),

   ledit procédé étant **caractérisé en ce que** :

   - on calcule au moins une intensité pondérée ($P_{id}$, $P_{iq}$) en faisant la somme des coordonnées ($I_d$, $I_q$, $I_F$) du vecteur d'intensité , chaque coordonnée ($I_d$, $I_q$, $I_F$) étant pondérée par un poids ($W_{ij}^d$, $W_{ij}^q$), un biais ($b_i^d$, $b_i^q$) étant en outre ajouté à ladite somme, les poids ($W_{ij}^d$, $W_{ij}^q$, $W_i^d$, $W_i^q$) et les biais ($b_i^d$, $b_i^q$, $b_0^d$, $b_0^q$) étant déterminés par une méthode de rétropropagation du gradient,

- et pour estimer les composantes ($\varphi_d$, $\varphi_q$) du flux magnétique ($\varphi$), on applique au moins une fonction sigmoïde (logsig, tansig) à ladite au moins une intensité pondérée ($P_{id}$, $P_{iq}$).

**2.** Procédé d'estimation du couple selon la revendication 1, **caractérisé en ce qu'**on calcule, pour chaque intensité pondérée ($P_{id}$, $P_{iq}$), une image (Im$_{id}$, Im$_{iq}$) en appliquant une fonction sigmoïde (logsig, tansig) à ladite intensité pondérée ($P_{id}$, $P_{iq}$).

**3.** Procédé d'estimation du couple selon la revendication 2, **caractérisé en ce qu'**on calcule les composantes ($\varphi_d$, $\varphi_q$) du flux en faisant pour chacune desdites composantes du flux, la somme des images (Im$_{id}$, Im$_{iq}$) délivrées par les fonctions sigmoïdes (logsig, tansig) pour la composante du flux considérée, chaque image (Im$_{id}$, Im$_{iq}$) étant pondérée par un poids ( $W_i^d$ , $W_i^q$ ), un biais ( $b_0^d$ , $b_0^q$ ) étant en outre ajouté à ladite somme.

**4.** Procédé d'estimation du couple selon l'une quelconque des revendications 1 à 3, **caractérisé en ce que**, pour le calcul de la composante directe ($\varphi_d$) du flux magnétique dans un repère de Park, on calcule quatre intensités pondérées (($P_{id}$)$_{1\leq i\leq 4}$) et on applique une fonction logsig : $x \mapsto \dfrac{1}{1+e^{-x}}$ à chacune des quatre intensités pondérées (($P_{id}$)$_{1\leq i\leq 4}$).

**5.** Procédé d'estimation du couple selon l'une quelconque des revendications 1 à 4, **caractérisé en ce que** pour le calcul de la composante quadratique ($\varphi_q$) du flux magnétique dans un repère de Park, on calcule quatre intensités pondérées (($P_{iq}$)$_{1\leq i\leq 4}$) et on applique une fonction tansig : $x \mapsto \tanh(x)$ à chacune des quatre intensités pondérées ($P_{iq}$)$_{1\leq i\leq 4}$.

**6.** Estimateur de couple (14) pour module de commande (2) d'une machine électrique (4) d'un véhicule automobile à propulsion électrique ou hybride, comprenant des moyens (20) pour recueillir les intensités ($I_1$, $I_2$, $I_3$) d'alimentation des phases du stator de la machine et l'intensité ($I_F$) d'alimentation du rotor de la machine, des moyens pour déterminer un vecteur d'intensité comprenant comme coordonnées une intensité directe ($I_d$), une intensité quadratique ($I_q$), lesdites intensité directe et quadratique correspondant auxdites intensités d'alimentation des phases exprimées dans un repère biphasé, et l'intensité ($I_F$) d'alimentation du rotor, un calculateur (22) apte à calculer les composantes ($\varphi_d$, $\varphi_q$) dans ledit repère biphasé du flux magnétique induit par la machine électrique (4) et apte à estimer le couple ($C_{est}$) fourni par la machine électrique (4), **caractérisé en ce que** le calculateur (22) comprend au moins un module de calcul (24, 30) d'une intensité pondérée (($P_{id}$)$_{1\leq i\leq 4}$, ($P_{iq}$)$_{1\leq i\leq 4}$) en faisant la somme des coordonnées ($I_d$, $I_q$, $I_F$) du vecteur d'intensité, chaque coordonnée ($I_d$, $I_q$, $I_F$) étant pondérée par un poids ( $W_{ij}^d$ , $W_{ij}^q$ ), un biais ( $b_i^d$ , $b_i^q$ ) étant en outre ajouté à ladite somme, les poids ( $W_{ij}^d$ , $W_{ij}^q$ , $W_i^d$ , $W_i^q$ ) et les biais ( $b_i^d$ , $b_i^q$ , $b_0^d$ , $b_0^q$ ) étant déterminés par une méthode de rétropropagation du gradient, chaque module de calcul (24, 30) étant associé à un module d'application (26, 32) d'une fonction sigmoïde apte à appliquer une fonction sigmoïde (logsig, tansig) à l'intensité pondérée (($P_{id}$)$_{1\leq i\leq 4}$, ($P_{iq}$)$_{1\leq i\leq 4}$) calculée par le module de calcul (24, 30) associé.

**7.** Estimateur de couple (14) selon la revendication 6, **caractérisé en ce que** la machine électrique (4) est une machine synchrone à rotor bobiné.

## Patentansprüche

**1.** Verfahren zur Schätzung des Drehmoments einer elektrischen Maschine (4) eines Kraftfahrzeugs mit Elektro- oder Hybridantrieb, wobei:

- die Speisestromstärken ($I_1$, $I_2$, $I_3$) der Phasen des Stators der Maschine und die Speisestromstärke ($I_F$) des Rotors der Maschine erfasst werden,
- ein Stromstärkevektor bestimmt wird, der als Koordinaten eine direkte Stromstärke ($I_d$), eine quadratische Stromstärke ($I_q$), wobei die direkte und die quadratische Stromstärke den in einem zweiphasigen Koordinatensystem ausgedrückten Speisestromstärken der Phasen entsprechen, und die Speisestromstärke ($I_F$) des Rotors umfasst,
- die Komponenten ($\varphi_d$, $\varphi_q$) des von der elektrischen Maschine (4) induzierten magnetischen Flusses ($\varphi$) in dem zweiphasigen Koordinatensystem geschätzt werden,
- und eine Schätzung ($C_{est}$) des von der elektrischen Maschine (4) gelieferten Drehmoments berechnet wird,

wobei das Verfahren **dadurch gekennzeichnet ist, dass**:

- wenigstens eine gewichtete Stromstärke ($P_{id}$, $P_{iq}$) berechnet wird, indem die Summe der Koordinaten ($I_d$, $I_q$, $I_F$) des Stromstärkevektors gebildet wird, wobei jede Koordinate ($I_d$, $I_q$, $I_F$) mit einem Gewicht ( $W_{ij}^d$ , $W_{ij}^q$ ) gewichtet wird, wobei außerdem ein Bias ( $b_i^d$ , $b_i^q$ ) zu der Summe hinzugefügt wird, wobei die Gewichte ( $W_{ij}^d$ , $W_{ij}^q$ , $W_i^d$ , $W_i^q$ ) und die Bias ( $b_i^d$ , $b_i^q$ , $b_0^d$ , $b_0^q$ ) durch ein Verfahren der Backpropagation bestimmt werden,
- und um die Komponenten ($\varphi_d$, $\varphi_q$) des magnetischen Flusses ($\varphi$) zu schätzen, wenigstens eine Sigmoidfunktion (logsig, tansig) auf die wenigstens eine gewichtete Stromstärke ($P_{id}$, $P_{iq}$) angewendet wird.

2. Verfahren zur Schätzung des Drehmoment nach Anspruch 1, **dadurch gekennzeichnet, dass** für jede gewichtete Stromstärke ($P_{id}$, $P_{iq}$) ein Bild ($Im_{id}$, $Im_{iq}$) berechnet wird, indem eine Sigmoidfunktion (logsig, tansig) auf die gewichtete Stromstärke ($P_{id}$, $P_{iq}$) angewendet wird.

3. Verfahren zur Schätzung des Drehmoment nach Anspruch 2, **dadurch gekennzeichnet, dass** die Komponenten ($\varphi_d$, $\varphi_q$) des Flusses berechnet werden, indem für jede der Komponenten des Flusses die Summe der Bilder ($Im_{id}$, $Im_{iq}$) gebildet wird, die von den Sigmoidfunktionen (logsig, tansig) für die betreffende Komponente des Flusses geliefert werden, wobei jedes Bild ($Im_{id}$, $Im_{iq}$) mit einem Gewicht ( $W_i^d$ , $W_i^q$ ) gewichtet wird, wobei außerdem ein Bias ( $b_0^d$ , $b_0^q$ ) zu der Summe hinzugefügt wird.

4. Verfahren zur Schätzung des Drehmoment nach einem der Ansprüche 1 bis 3, **dadurch gekennzeichnet, dass** für die Berechnung der direkten Komponente ($\varphi_d$) des magnetischen Flusses in einem Park-Koordinatensystem vier gewichtete Stromstärken (($P_{id}$)$_{1\leq i\leq 4}$) berechnet werden und eine Funktion logsig: $x \mapsto \dfrac{1}{1+e^{-x}}$ auf jede der vier gewichteten Stromstärken (($P_{id}$)$_{1\leq i\leq 4}$) angewendet wird.

5. Verfahren zur Schätzung des Drehmoment nach einem der Ansprüche 1 bis 4, **dadurch gekennzeichnet, dass** für die Berechnung der quadratischen Komponente ($\varphi_q$) des magnetischen Flusses in einem Park-Koordinatensystem vier gewichtete Stromstärken (($P_{iq}$)$_{1\leq i\leq 4}$) berechnet werden und eine Funktion tansig: $x \mapsto \tanh(x)$ auf jede der vier gewichteten Stromstärken ($P_{iq}$)$_{1\leq i\leq 4}$ angewendet wird.

6. Drehmomentschätzer (14) für ein Steuermodul (2) einer elektrischen Maschine (4) eines Kraftfahrzeugs mit Elektro- oder Hybridantrieb, welcher Mittel (20) zum Erfassen der Speisestromstärken ($I_1$, $I_2$, $I_3$) der Phasen des Stators der Maschine und der Speisestromstärke ($I_F$) des Rotors der Maschine, Mittel zum Bestimmen eines Stromstärkevektors, der als Koordinaten eine direkte Stromstärke ($I_d$), eine quadratische Stromstärke ($I_q$), wobei die direkte und die quadratische Stromstärke den in einem zweiphasigen Koordinatensystem ausgedrückten Speisestromstärken der Phasen entsprechen, und die Speisestromstärke ($I_F$) des Rotors umfasst, und einen Rechner (22), der in der Lage ist, die Komponenten ($\varphi_d$, $\varphi_q$) des von der elektrischen Maschine (4) induzierten magnetischen Flusses in dem zweiphasigen Koordinatensystem zu berechnen, und in der Lage ist, das von der elektrischen Maschine (4) gelieferte Drehmoment zu schätzen ($C_{est}$), umfasst, **dadurch gekennzeichnet, dass** der Rechner (22) wenigstens ein Modul (24, 30) umfasst zur Berechnung einer gewichteten Stromstärke (($P_{id}$)$_{1\leq i\leq 4}$, ($P_{iq}$)$_{1\leq i\leq 4}$), indem die Summe der Koordinaten ($I_d$, $I_q$, $I_F$) des Stromstärkevektors gebildet wird, wobei jede Koordinate ($I_d$, $I_q$, $I_F$) mit einem Gewicht ( $W_{ij}^d$ , $W_{ij}^q$ ) gewichtet wird, wobei außerdem ein Bias ( $b_i^d$ , $b_i^q$ ) zu der Summe hinzugefügt wird, wobei

die Gewichte ( $W_{ij}^d$ , $W_{ij}^q$ , $W_i^d$ , $W_i^q$ ) und die Bias ( $b_i^d$ , $b_i^q$ , $b_0^d$ , $b_0^q$ ) durch ein Verfahren der Backpropagation bestimmt werden, wobei jedes Berechnungsmodul (24, 30) einem Anwendungsmodul (26, 32) für eine Sigmoidfunktion zugeordnet ist, das in der Lage ist, eine Sigmoidfunktion (logsig, tansig) auf die gewichtete Stromstärke $((P_{id})_{1 \le i \le 4}, (P_{iq})_{1 \le i \le 4})$ anzuwenden, die von dem zugeordneten Berechnungsmodul (24, 30) berechnet wurde.

7. Drehmomentschätzer (14) nach Anspruch 6, **dadurch gekennzeichnet, dass** die elektrische Maschine (4) eine Synchronmaschine mit gewickeltem Rotor ist.

## Claims

1. Method for estimating the torque of an electric machine (4) of a motor vehicle with electric or hybrid propulsion, wherein:

   - the power supply intensities ($I_1$, $I_2$, $I_3$) of the phases of the stator of the machine and the power supply intensity ($I_F$) of the rotor of the machine are collected,
   - an intensity vector is determined that comprises, as coordinates, a direct intensity ($I_d$), a quadratic intensity ($I_q$), said direct and quadratic intensities corresponding to said power supply intensities of the phases expressed in a two-phase reference frame, and the power supply intensity ($I_F$) of the rotor,
   - the components ($\varphi_d$, $\varphi_q$) are estimated in the two-phase reference frame of the magnetic flux ($\varphi$) induced by the electric machine (4),
   - and an estimation ($C_{est}$) of the torque supplied by the electric machine (4) is calculated,

   said method being **characterized in that**:

   - at least one weighted intensity ($P_{id}$, $P_{iq}$) is calculated by summing the coordinates ($I_d$, $I_q$, $I_F$) of the intensity vector, each coordinate ($I_d$, $I_q$, $I_F$) being weighted by a weight ( $W_{ij}^d$, $W_{ij}^q$ ) , a bias ( $b_i^d$, $b_i^q$ ) being also added to said sum, the weights ( $W_{ij}^d$, $W_{ij}^q$, $W_i^d$, $W_i^q$ ) and the biases ( $b_i^d$, $b_i^q$, $b_0^d$, $b_0^q$ ) being determined by a gradient backpropagation method,
   - and, to estimate the components ($\varphi_d$, $\varphi_q$) of the magnetic flux ($\varphi$), at least one sigmoid function (logsig, tansig) is applied to said at least one weighted intensity ($P_{id}$, $P_{iq}$).

2. Torque estimation method according to Claim 1, **characterized in that**, for each weighted intensity ($P_{id}$, $P_{iq}$), an image ($Im_{id}$, $Im_{iq}$) is calculated by applying a sigmoid function (logsig, tansig) to said weighted intensity ($P_{id}$, $P_{iq}$).

3. Torque estimation method according to Claim 2, **characterized in that** the components ($\varphi_d$, $\varphi_q$) of the flux are calculated by summing for each of said components of the flux, the images ($Im_{id}$, $Im_{iq}$) delivered by the sigmoid functions (logsig, tansig) for the component of the flux considered, each image ($Im_{id}$, $Im_{iq}$) being weighted by a weight ( $W_i^d$, $W_i^q$ ), a bias ( $b_0^d$, $b_0^q$ ) being also added to said sum.

4. Torque estimation method according to any one of Claims 1 to 3, **characterized in that**, for the calculation of the direct component ($\varphi_d$) of the magnetic flux in a park reference frame, four weighted intensities (($P_{id})_{1 \le i \le 4}$) are calculated and a logsig function: $x \rightarrow \frac{1}{1+e^{-x}}$ is applied to each of the four weighted intensities (($P_{id})_{1 \le i \le 4}$).

5. Torque estimation method according to any one of Claims 1 to 4, **characterized in that**, for the calculation of the quadratic component ($\varphi_q$) of the magnetic flux in a park reference frame, four weighted intensities (($P_{iq})_{1 \le i \le 4}$) are calculated and a tansig function: $x \mapsto \tanh(x)$ is applied to each of the four weighted intensities (($P_{iq})_{1 \le i \le 4}$).

6. Torque estimator (14) for a control module (2) of an electric machine (4) of a motor vehicle with electric or hybrid propulsion, comprising means (20) for collecting the power supply intensities ($I_1$, $I_2$, $I_3$) of the phases of the stator of the machine and the power supply intensity ($I_F$) of the rotor of the machine, means for determining an intensity vector comprising, as coordinates, a direct intensity ($I_d$), a quadratic intensity ($I_q$), said direct and quadratic intensity corresponding to said power supply intensities of the phases expressed in a two-phase reference frame, and the power supply intensity ($I_F$) of the rotor, a computer (22) capable of calculating the components ($\varphi_d$, $\varphi_q$) in said two-phase reference frame of the magnetic flux induced by the electric machine (4) and capable of estimating the torque ($C_{est}$) supplied by the electric machine (4), **characterized in that** the computer (22) comprises at least one computation module (24, 30) for computing a weighted intensity (($P_{id}$)$_{1\leq i\leq 4}$, ($P_{iq}$)$_{1\leq i\leq 4}$) by summing the coordinates ($I_d$, $I_q$, $I_F$) of the intensity vector, each coordinate ($I_d$, $I_q$, $I_F$) being weighted by a weight ($W_{ij}^d$, $W_{ij}^q$), a bias ($b_i^d$, $b_i^q$) being also added to said sum, the weights ($W_{ij}^d$, $W_{ij}^q$, $W_i^d$, $W_i^q$) and the biases ($b_i^d$, $b_i^q$, $b_0^d$, $b_0^q$) being determined by a gradient backpropagation method, each computation module (24, 30) being associated with a sigmoid function application module (26, 32) capable of applying a sigmoid function (logsig, tansig) to the weighted intensity (($P_{id}$)$_{1\leq i\leq 4}$, ($P_{iq}$)$_{1\leq i\leq 4}$) calculated by the associated computation module (24, 30).

7. Torque estimator (14) according to Claim 6, **characterized in that** the electric machine (4) is a wound rotor synchronous machine.

# FIG.2

```
┌─────────────┐
│     E01     │
└─────────────┘
       │
       ▼
┌─────────────┐
│     E02     │
└─────────────┘
       │
       ▼
┌─────────────┐
│     E03     │
└─────────────┘
       │
       ▼
┌─────────────┐
│     E04     │
└─────────────┘
       │
       ▼
┌─────────────┐
│     E05     │
└─────────────┘
       │
       ▼
┌─────────────┐
│     E06     │
└─────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 103414423